# EUROPÄISCHE PATENTSCHRIFT

(11) **EP 2 581 127 B1**
(45) Veröffentlichungstag und Bekanntmachung des Hinweises auf die Patenterteilung: **08.07.2020**
(21) Anmeldenummer: 12006940.6
(22) Anmeldetag: 05.10.2012
(51) Int. Cl.: B01D 53/04, B01D 53/75

(54) **Verfahren zur Luftreinigung, vorzugsweise von flüchtigen organischen Verbindungen**
Method for air purification, preferably of volatile organic compounds
Procédé de nettoyage à l'air, de préférence de liaisons organiques volatiles

(30) Priorität: 11.10.2011 DE 102011115538; 09.01.2012 DE 102012000206
(43) Veröffentlichungstag der Anmeldung: 17.04.2013
(73) Patentinhaber: uviblox GmbH, 12051 Berlin (DE)
(72) Erfinder: Seitz, Frank, 67122 Altrip (DE)
(74) Vertreter: Burger, Hannes

(56) Entgegenhaltungen:
- EP-A1- 0 931 581
- EP-A1- 1 310 274
- WO-A1-2008/145175
- WO-A1-2009/002295
- DE-A1- 19 832 237
- US-A1- 2005 211 090
- US-A1- 2008 116 054
- US-A1- 2009 090 240
- US-B1- 6 179 972
- US-B1- 6 358 374
- FRANK SEITZ: "Fotooxidation in der Abluft Wirtschaftliche umsetzung der VOC-Richtlinie", WLB (WASSER LUFT BODEN), no. 10/2008, 1 October 2008 (2008-10-01), pages 2-5, XP055591566,

## Beschreibung

### Stand der Technik

Die Erfindung bezieht sich auf ein Verfahren zur Aufbereitung von Luft durch Adsorption von Schadstoffen in mindestens einem Filter, wobei der mindestens eine Filter thermisch regenerierbar ist und wobei bei der Regeneration Schadstoffe mittels Photooxidation abgebaut werden. Des Weiteren bezieht sich die Erfindung auf eine Vorrichtung zur Durchführung des Verfahrens.

Aufgrund strenger gesetzlicher Vorgaben bei der Emission von Schadstoffen ist es erforderlich, die Abluft von Industrieanlagen oder anderer Emissionstellen aufzubereiten. Ebenso ist es häufig erforderlich, Abluft aufzubereiten, um eine Geruchsbelästigung zu vermeiden.

Abluft kann in passiven oder aktiven Systemen gereinigt werden. Passive Systeme sind Adsorber, in denen sich die Schadstoffe an ein geeignetes Adsorptionsmittel anheften. Das Adsorptionsmittel muss nach Beladung wirtschaftlich aufwändig ausgetauscht und entsorgt bzw. separat verwertet werden, wobei insbesondere sehr niedrige Konzentrationen einen überproportional häufigen Wechsel bzw. spezifisch hohe Betriebsmittelkosten bedingen.

Bei adsorptiven Verfahren wird die Luft durch einen Adsorptionsfilter geleitet, an dem die enthaltenen Schadstoffe adsorbiert werden. Als Adsorptionsfilter kommen beispielsweise Schüttungen aus Zeolithen oder Aktivkohlen zum Einsatz. Adsorptive Verfahren zur Aufbereitung von Luft haben einen sehr hohen Betriebsmittelverbrauch durch Adsorptionsmittel bei niedrigen Schadstoff- bzw. Geruchskonzentrationen, und einen hohen Stromverbrauch für die Überwindung hoher Druckverluste in den Schüttungen. Adsorptionsräder und Regeneration mittels z.B. Wasserdampf, Temperatur oder Unterdruck schaffen hier bedingt Abhilfe.

Zur Aufbereitung der Luft werden auch Biowäscher bzw. Biofilter verwendet. Dabei wird ein organisches Trägermaterial wie z. B. Rindenmulch oder Hackschnitzel in ein Filterbett mit ca. 1-3 m Schütthöhe gefüllt, und das Filterbett wird von der Luft durchströmt. Mit diesen Verfahren lassen sich jedoch vielfach die geforderten Grenzwerte nicht erreichen und es sind vorgeschaltete Aufbereitungsstufen erforderlich. Der von vornherein große Platzbedarf erfordert oft kostenintensive bauliche Vorbereitung.

Zu den aktiven Verfahren gehören thermische Verbrennungsverfahren, Plasmaverfahren und Photooxidationsverfahren.

Thermische Verbrennungs- und Oxidationsverfahren erhitzen die Luft auf Temperaturen um 900°C, so dass enthaltene flüchtige organische Substanzen (VOC) zu Kohlendioxid und Wasser umgesetzt werden. Bei niedrigen Konzentrationen <1.500 mg VOC/m³ arbeiten diese Verfahren nicht autotherm, so dass zusätzlicher Brennstoff zugeführt werden muss. Sie verursachen hohe Betriebskosten durch Zugabe von Fremdgas und produzieren erhöhte CO₂-Emissionen.

Plasmaverfahren - prinzipiell auch für die Geruchseliminierung geeignet - müssen oft zum Schutz der eingesetzten Elektroden mit Fremdluftzumischung arbeiten, was zur Verdünnung des Abluftstroms führt. Die erzielbare Energiedichte genügt zwar meist zur Geruchsreduktion, jeodch selten zum vollständigen Abbau von VOC höherer Konzentrationen.

Über Photooxidationsverfahren können Schadstoffe direkt durch radikalische Kettenreaktion mittels UV-Licht gespalten werden. Dieser Reaktionsprozess wird Photolyse genannt. Neben der direkten Reaktion des UV-Lichts mit den Schadstoffen sind noch weitere Reaktionen möglich. Je höher die Intensität der VUV-Strahlung (VakuumUV = Strahlung < 200nm), desto besser wird Luftsauerstoff ozonolysiert. Das entstehende Ozon zerfällt zu Radikalen, welche den Photolyseprozess überproportional verstärken. Das in der Luftfeuchtigkeit enthaltene Wasser wird ebenfalls homolysiert, in OH-Radikale gespalten, welche ebenfalls an der Oxidationsreaktion mit dem Schadstoff teilnehmen.

Aus der DE 10147 703 A1 ist ein Verfahren und eine Vorrichtung zur Reinigung von Abluft bekannt. Die in der Abluft enthaltenen Schadstoffe werden unter Zugabe von Ozon abgebaut, wobei der Vorgang durch UV-Licht unterstützt wird. Das benötigte Ozon wird aufwändig außerhalb des Reaktionsraums produziert.

Die Dokumente US 6 358 374 B1 und WO 2009/00 22 95 A1 offenbaren eine Luftreinigung, wobei ein Filter mit Hilfe eines durch Klappen vom zu reinigenden (Haupt-) Luftstrom abgezweigten Luftstrom regeneriert wird. Nach der Regeneration wird die Regenerationsluft in den Hauptluftstrom durch neuerliche Verstellung der Klappen entlüftet.

Auch die Photooxidationsverfahren konnten sich in den vergangenen Jahren noch nicht durchsetzen. Systeme früherer Generationen ließen nur geringe Energiedichten zu, benötigten jedoch aufgrund der Energieversorgung hohe Startströme. Die Lebensdauer und die Effizienz der Strahler waren gering. Daher galt die Photooxidation als teuer und aufwendig.

Probleme bei der aktiven Abluftreinigung entstehen dann, wenn die Abluft zusätzlich zu den Schadstoffen mit weiteren Stoffen wie Aerosolen, Stäuben oder anorganischen Gasen belastet ist. Diese teilweise stark aggressiven Medien können in den Behandlungsanlagen Beläge bilden oder diese insbesondere durch saure oder alkalische Kondensate korrosiv schnell zerstören. Außerdem müssen Reinigungsanlagen, die im kontinuierlichen Betrieb durchströmt werden, auf das jeweilige Maximum der möglichen Belastung ausgelegt werden, obwohl möglicherweise lange Betriebsphasen durch nur sehr geringe Belastungen gekennzeichnet sind. Die Anlagen müssen daher überdimensioniert und können nicht mit einheitlichen Betriebsparametern gesteuert werden mit dem Ergebnis, dass sie energetisch und betriebswirtschaftlich gegenüber den passiven Verfahren im Nachteil sein können.

Industrieunternehmen, die eine Abluftreinigung zur Reduzierung von flüchtigen organischen Substanzen, (volatile organic compound, VOC) bzw. Gerüchen betreiben, haben eine Reihe von Anforderungen an die einzusetzende Technik. So sollte sich diese neben möglichst niedrigen Investitions- und Betriebskosten durch geringen Platzbedarf und hohe Betriebsstabilität auszeichnen. Flexible Möglichkeiten zur Anpassung an die Betriebsbedingungen im Hinblick auf zukünftige produktionsintegrierte Emissionsreduzierungen oder auch umgekehrt Kapazitätserweiterungen sind weitere gewünschte Vorzüge.

Aufgabe der Erfindung ist ein Verfahren zur Luftreinigung bereitzustellen, dass in der Lage ist, die Nachteile der aktiven Verfahren durch Kombination und Anpassung der Verfahrensführung dahingehend zu optimieren, dass Betriebskosten sowie Investitionskosten drastisch reduziert werden können sowie eine hohe Flexibilität wie Stabilität des Verfahrens erreicht wird. Dies soll auch bei stark schwankenden bzw. niedrigen Schadstoffkonzentrationsverläufen gelingen und somit ein wesentlicher wirtschaftlicher Vorteil gegenüber den passiven Verfahren erzielt werden.

### Offenbarung der Erfindung

Es wird ein Verfahren zur Aufbereitung von Luft vorgeschlagen, bei dem die Luft durch Adsorption von Schadstoffen in mindestens einem Filter aufbereitet wird, wobei der mindestens eine Filter thermisch regenerierbar ist und wobei bei der Regeneration Schadstoffe mittels UV-Strahlung, vorzugsweise mittels Photooxidation, abgebaut werden, wobei die Regeneration in einem separaten Luftkreislauf stattfindet und der Schadstoffabbau bei der Regeneration der Filter durch Zugabe von Reaktionsmittel ausgewählt aus Luft oder Sauerstoff unterstützt wird.

Dieses Verfahren wird als "Regenerative Photooxidation" bezeichnet.

Die im Abluftstrom enthaltenen organischen Stoffe schwankender Konzentration werden auf einem Träger (Adsorptionsmittel) adsorbiert und aufkonzentriert. Dieser Träger wird zyklisch regeneriert, wobei die Regenerationsluft durch UV-Oxidation oder eine Kombinationen von UV-Oxidation mit Katalysatoren gereinigt wird. Die Regeneration findet in einem separaten Luftkreislauf statt, wodurch Konzentration und Temperatur der zu behandelnden Luft so geregelt werden können, dass eine optimale wirtschaftliche Betriebsführung erreicht werden kann. Die Regeneration erfolgt batch-weise, wobei eine parallele Anordnung von mindestens zwei Adsorptionsstufen eine kontinuierliche Abluftreinigung im Hauptstrom ermöglicht.

Die Adsorptionsfilter sind in einer Ausführungsform des Verfahrens als Schüttgutfilter ausgeführt. Dabei wird das Adsorptionsmittel, beispielsweise Zeolithe oder Aktivkohle in einem Rahmen auf einem Filterbett aufgeschüttet. Das verwendete Adsorptionsmittel wird je nach Charakter der VOC (polare VOC oder nonpolare VOC) ausgewählt. Zu den geeigneten Adsorptionsmitteln zählen beispielsweise Aktivkohlen, Zeolithe, Molekularsiebe, Silicagele, Mineralfasern und Kohlefasern.

In einer weiteren Ausführungsform des Verfahrens werden die Adsorptionsfilter als Festeinbauten ausgeführt. Das Adsorptionsmittel wird dabei auf einen Träger aufgebracht, der beispielsweise als Wabenstruktur oder einer anderen geeigneten Festkörperpackung ausgeführt ist.

Es besteht auch die Möglichkeit das Verfahren durch kontinuierlich arbeitende Adsorptionsräder in einen kontinuierlichen Betrieb zu überführen. Die in den Adsorptionsrädern eingesetzten Filter sind üblicherweise aus aufgewickelten Bahnen aufgebaut, die mit Adsorptionsmittel beschichtet sind. Dabei lassen sich die in den Adsorptionsrädern eingesetzten Filter in mehrere Bereiche unterteilen, wobei mindestens ein Bereich Schadstoffe aus der Luft adsorbiert, während andere Bereiche regeneriert werden oder vor ihrer erneuten Verwendung abgekühlt werden.

Der mit flüchtigen organischen Substanzen (VOC) belastete Hauptstrom wird über eine oder wechselweise über mehrere parallele Adsorptionsstufen geführt. Hierbei werden die schwankenden VOC-Frachten komplett auf den geforderten Emissionsgrenzwert abgeschieden. Die austretende Abluft erfüllt dauerhaft die geforderten Grenzwerte. Nach Beladung des Adsorptionsmittels wird dieses vom Hauptluftstrom getrennt und im Regenerationskreislauf desorbiert. Dieser Kreislauf wird in einem separaten Luftkreislauf mittels Gebläse betrieben. Die Kreislaufluft wird hierbei über eine UV-Stufe und anschließend über eine Katalysatorstufe geführt, bevor sie zurück in die Adsorptionsstufe gelangt. Durch den Energieeintrag der UV-Strahlung sowie die Abwärme der UV-Lampen erwärmt sich die Kreislaufluft bis auf Betriebstemperaturen, die für die Desorption und Regeneration des Adsorptionsmittels sowie für den Betrieb der Katalysatorstufe erforderlich sind. Falls der Wärmeeintrag durch die UV-Strahlung nicht ausreichend ist bzw. zur Temperaturregelung kann eine zusätzliche Heizung, beispielsweise elektrisch oder über ein Heizmedium vorgesehen werden. Bei geregelten Mediumtemperaturen zwischen 100 °C und 350 °C, bevorzugt zwischen 150 °C und 200 °C, werden die zuvor adsorbierten organischen Schadstoffe wieder aus der Adsorptionsstufe unter definierten Bedingungen schnell und gleichmäßig ausgetrieben und mit dem Kreislaufabluftstrom der UV-Photooxidation mit nachgeschalteter Katalyse zugeführt.

Hier werden diese dann abgebaut bis zur vollständigen Mineralisierung (z.B. CO2, H2O). Die UV-Strahlung wird durch UV-Lampen erzeugt, die beispielsweise als Niederdruck- und/oder Mitteldruckstrahler ausgeführt sind. Bevorzugt wird die Intensität der abgegeben UV-Strahlung geregelt, um die Intensität an die Schadstoffkonzentration anzupassen. Bevorzugt wird ein elektronisches Vorschaltgerät zur Regelung der UV-Lampen eingesetzt. Durch diese Regelung wird sowohl Energie eingespart, als auch die Lebensdauer der eingesetzten UV-Lampen verlängert.

Das von den UV-Lampen abgestrahlte UV-Licht umfasst elektromagnetische Wellen, deren Energiegehalt direkt von der Wellenlänge abhängig ist. Je kürzer die Wellenlänge, desto energiereicher die Strahlung. Abhängig von der Wellenlänge wird zwischen UV-A, UV-B, UV-C und VUV (Vakuum UV) unterschieden. VUV Strahlung weist eine Wellenlänge von unter 200 nm auf und stellt damit die energiereichste Form dar, welche für technische Abluftreinigungsprozesse zur Verfügung steht. Eine typische UV-Lampe emittiert verschiedene Wellenlängen geleichzeitig, wobei sowohl das Spektrum als auch die Wellenlänge mit höchster Intensität abhängig von der Bauart des UV-Strahlers sind.

Schadstoffe, die durch die UV-Strahlung aufgespalten werden sollen, müssen die durch den UV-Strahler emittierte UV-Strahlung absorbieren können. Das Absorptionsspektrum und damit das Absorptionsmaxium sind abhängig von der Art des jeweiligen Schadstoffs, wobei das Emissionsspektrum des UV-Strahlers idealerweise mit dem Absorptionsmaximum des Schadstoffs zusammenfällt. Man kennt für nahezu alle Verbindungen und funktionellen Gruppen diese Maxima. Sie hängen von den beteiligten Elementen und chemischen Bindungstypen ab.

Der Reaktionsprozess, bei dem Schadstoffe durch Absorption von Licht aufgespalten werden, wird Photolyse genannt. Die Kohlenwasserstoffanteile werden mineralisiert bis zu CO₂ und Wasser. Fremdatome wie Cl, N, S und so weiter werden auf ihre niedrigsten Oxidationsstufen transformiert, beispielsweise zu HCl, NOₓ, SOₓ.

Photolyse ist jedoch nicht der einzige Effekt, der für einen Schadstoffabbau genutzt werden kann. Je höher die Intensität der VUV-Strahlung, desto besser wird Luftsauerstoff ozonolysiert, das heißt aus dem Luftsauerstoff wird durch die UV-Strahlung Ozon erzeugt. Das entstehende Ozon zerfällt zu Radikalen, welche den Photolyseprozess überproportional verstärken. Das in der Luftfeuchtigkeit enthaltene Wasser wird ebenfalls homolysiert, in OH-Radikale gespalten, welche ebenfalls an der Oxidationsreaktion mit dem Schadstoff teilnehmen:

| | |
|---|---|
| Photolyse: | R-R + hu → R^{•} + R^{•} → CO₂ + H₂O |
| Ozonolyse: | O₂ + hυ → O₃ + hυ → O^{•} |
| Homolyse: | H₂O + hu → OH^{•} |

R bezeichnet hier eine organische Verbindung (oder Teile davon mit/ohne Fremdatome).

Durch das Aufkonzentrieren der Schadstoffe in den Adsorptionsfiltern lassen sich konstante und hohe VOC-Konzentrationen einstellen, welche die Effektivität der UV-Stufe drastisch erhöhen. Die schnelle Desorption führt zu deutlich kürzeren Regenerationszeiten gegenüber den Adsorptionszeiten. Nach Unterschreiten eines vorgegebenen Konzentrationswertes wird die UV-Stufe abgeschaltet. Die Adsorptionsstufe wird heruntergekühlt und steht dann regeneriert erneut für den Adsorptionsbetrieb bereit.

Geeignete Verfahrenskombinationen erschließen weitere Anwendungsmöglichkeiten. So führt die Wahl geeigneter Katalysatormaterialien mit photokatalytischer bzw. oxidationskatalytischer Funktion zu weiteren Energieeinsparungen. Im Falle toxischer bzw. stark schwankender Eingangskonzentrationen kann eine vorgeschaltete angepasste Photooxidationsstufe komplexe-Verbindungen soweit metabolisieren, dass diese bioverfügbar werden und ein nachgeschalteter Biofilter oder Biowäscher zum Einsatz kommen kann, wie dies bereits in der Wasserbehandlung standardisiert ist. Auch der kombinierte Einsatz mit Nanopartikeln ist möglich.

In einer Ausführungsform des Verfahrens wird die Oxidation der Schadstoffe durch den Einsatz von mindestens einem Oxidationskatalysator unterstützt. Geeignete Oxidationskatalysatoren umfassen beispielsweise Platin, Rhodium und/oder Palladium. Diese katalytisch aktiven Elemente werden auf einen Träger mit großer Oberfläche, beispielsweise Schüttgüter (beispielsweise Keramik oder Aluminiumoxid), Wabenkörper oder Aktivkohlen (polydispers oder monodispers), aufgebracht oder direkt als Presslinge hergestellt (MnO).

In einer Ausführungsform des Verfahrens wird der Schadstoffabbau mittels Photokatalyse durch photokatalytische Materialien unterstützt. Geeignete Materialien für die Photokatalyse umfassen beispielsweise Titandioxid (TiO₂) und Zinkoxid (ZnO). Die photokatalytischen Materialien können zur Vergrößerung der Reaktionsoberfläche und der Reaktivität auch in Form von Nanomaterialien, beispielsweise Nano-TiO₂ oder Nano ZnO, verwendet werden. Die Nanomaterialien weisen dabei Strukturen im Bereich unter 100 nm Größe auf und können als Partikel oder Strukturen auf größeren Oberflächen auftreten. Die Reaktivität dieser Strukturen steigt umgekehrt überproportional zur Größe der Strukturen an.

Entscheidend für das optimale Zusammenwirken von UV-Strahlern und photokatalytischen Materialien wie TiO₂ oder ZnO sind nicht nur die Strahlerausbeuten im UVA-Bereich (320-400nm), sondern auch die Emissionen im UVC- und VUV-Bereich. Während letztere aufgrund ihrer geringeren Eindringtiefen in Medien hauptsächlich im strahlernahen Bereich wirken, können UVA-Bestandteile auch in strahlerferneren Regionen die photokatalytischen Materialien anregen und somit die Gesamteffektivität deutlich erhöhen. Bevorzugt werden deshalb Mitteldruckstrahler eingesetzt, die vorzugsweise hohe Strahlungsflüsse um 366nm und 405nm, als auch bei Wellenlängen kleiner als 230 nm aufweisen.

Zur weiteren Unterstützung des Schadstoffabbaus bei der Regeneration der Adsorptionsfilter wird in der Erfindung ein Reaktionsmittel ausgewählt aus Luft oder Sauerstoff zugegeben. Das Reaktionsmittel wird dazu gasförmig in die Regenerations-Kreislaufleitung eingeleitet.

In einer weiteren Ausführungsform des Verfahrens wird Luft aus der Regenerations-Kreislaufleitung ausgeschleust.

Die Reinigungswirkung des Verfahrens kann in einer Ausführungsform der Erfindung durch das Nachschalten einer biologischen Stufe verbessert werden. Diese kann beispielsweise als Biowäscher, Biotricklingfilter, Kompost- oder Mulchbett und/oder Phytofilter ausgeführt sein. Die durch UV-Strahlung nicht mehr toxischen Transformationsprodukte in reduzierter Konzentration können von Mikroorganismen weiter metabolisiert werden bis zur vollständigen Mineralisierung.

In einer Ausführungsform des Verfahrens werden mehrere Katalysatoren zur Unterstützung des Schadstoffabbaus kombiniert, so dass beispielsweise sowohl ein Oxidationskatalysator als auch Photokatalyse eingesetzt werden.

Mit dem erfindungsgemäßen Verfahren lassen sich flüchtige organische Substanzen (VOC) aus der behandelten Luft entfernen. Zu den behandelten Stoffgruppen VOC zählen unter anderem BTEX-Aromate, chlorierte Kohlenwasserstoffe (CKW), chlorierte aromatische Kohlenwasserstoffe (PAK), Ketone (MEK, MIBK), Alkohole und Aldehyde, organische Nitroverbindungen, Pestizide, organische und anorganische Schwefelverbindungen und Ammonium.

Anwendungen für das Verfahren finden sich beispielsweise in der Mineralölindustrie, die Lack-, Farben- und Gummi verarbeitende Industrie, sowie in der Chemischen und Pharmazeutische Industrie, der Automobil-, Lebensmittel-, Papier- und Zellstoffindustrie

Des Weiteren wird eine Vorrichtung zur Durchführung des soeben beschriebenen Verfahrens vorgeschlagen.

Die Vorrichtung umfasst mindestens einen Filter und mindestens einen UV-Reaktor mit UV-Lichtquelle, wobei der mindestens eine Filter eingerichtet ist Schadstoffe aus einem Luftstrom zu adsorbieren und wobei der Filter thermisch regeneriert werden kann wobei die Regeneration in einem separaten Luftkreislauf stattfindet und der Schadstoffabbau bei der Regeneration der Filter durch Zugabe von Reaktionsmittel ausgewählt aus Luft oder Sauerstoff unterstützt wird.

Je nach Ausführungsform kann die Vorrichtung des Weiteren auch Tropfenabscheider und/oder Staub-Aerosolfilter, eine Kreislaufleitung, ein Förderaggregat in der Hauptleitung und/oder gegebenenfalls in der Kreislaufleitung, Mittel zur Konzentrationsmessung, Katalysatorbehälter, Wärmetauscher, Kondensatoren, Wäscher und Stripper umfassen.

Durch das Vorsehen eines Tropfenabscheiders und/oder Staub-Aerosolfilters am Lufteinlass der Vorrichtung werden grobe Verunreinigungen, die die nachgeschalteten Filter vorzeitig altern lassen und/oder in ihrer Funktionen beeinträchtigen würden, zurückgehalten.

Sofern die aufzubereitende Luft nicht bereits mit ausreichendem Druck in die Vorrichtung einströmt, kann die Luft über eine Pumpe oder ein Gebläse gefördert und durch die Adsorptionsfilter gedrückt werden.

Als Filter werden Adsorptionsfilter eingesetzt. Die Adsorptionsfilter sind in einer Ausführungsform des Verfahrens als Schüttgutfilter ausgeführt. Dabei wird das Adsorptionsmittel, beispielsweise Zeolithe oder Aktivkohle in einem Rahmen auf einem Filterbett aufgeschüttet. Das verwendete Adsorptionsmittel wird je nach Charakter der VOC (polare VOC oder nonpolare VOC) ausgewählt. Zu den geeigneten Adsorptionsmitteln zählen beispielsweise Aktivkohlen, Zeolithe, Molekularsiebe, Silicagele, Mineralfasern und Kohlefasern.

In einer weiteren Ausführungsform der Vorrichtung werden die Adsorptionsfilter als Festeinbauten ausgeführt. Das Adsorptionsmittel wird dabei auf einen Träger aufgebracht, der beispielsweise als Wabenstruktur oder eine andere geeignete Festkörperpackung ausgeführt ist.

Um einen kontinuierlichen Betrieb der Vorrichtung zu ermöglichen, umfasst die Vorrichtung entweder mindestens zwei Adsorptionsfilter oder der Filter ist als Adsorptionsrad ausgeführt. Ist der Filter als Adsorptionsrad ausgeführt, wird das Adsorptionsrad in mehrere Bereiche unterteilt, wobei mindestens ein Bereich Schadstoffe aus der Luft adsorbiert und mindestens ein Bereich regeneriert wird. Sind mehrere Adsorptionsfilter vorgesehen, wird mindestens ein Filter zur Adsorption der Schadstoffe verwendet, während mindestens ein Filter regeneriert wird.

Der UV-Reaktor der Vorrichtung weist mindestens eine UV-Lichtquelle auf. Als UV-Lichtquelle werden als Niederdruckstrahler (ND), Mitteldruckstrahler (MD), Hochdruckstrahler (HD) und/oder Excimer-Strahler ausgeführte UV-Lampen eingesetzt. Niederdruckstrahler weisen Fülldrücke < 1 bar auf, womit sich diskrete Emissionslinien bei 185 nm und 254 nm erzeugen lassen. Diese Lampen werden gewöhnlich für die Desinfektion genutzt und sind in der ganzen Welt als Massenprodukt mit Leistungklassen von 10 bis 400 W erhältlich. Der Fülldruck von Mitteldruckstrahlern beträgt 1 bis 10 bar, womit quasikontinuierliche Emissionsspektren und Leistungen von 1.000 W bis 32.000 W auf engstem Raum zu realisieren sind. Mitteldruckstrahler weisen hohe Strahlungsflüsse um 366nm und 405nm, als auch bei Wellenlängen unter 230 nm auf. Durch die Möglichkeit der Anpassung der Emissionsspektren an die Absorptionsspektren der Schadstoffe hat man es somit immer mit einem speziell entwickelbaren Produkt zu tun. Die Vorteile dieser in den letzten Jahren weiterentwickelten Lampen sind hohe Energiedichten und VUV-Ausbeuten, lange Lebensdauer, polychromatische Emissionen und geringe Betriebskosten. Die UV-Lampen können wahlweise mit oder ohne Schutzrohre bzw. Schutzgehäuse eingesetzt werden.

Für technische Anwendungen müssen UV-Lampen mittels Vorschaltgeräten mit der erforderlichen elektrischen Spannung, Stromstärke sowie Frequenz versorgt werden. Früher verwendete man hierzu konventionelle magnetische Vorschaltgeräte. Diese großen und schweren Geräte zeichneten sich durch hohe Energieverluste aus. Die enormen Einschaltströme konnten schon einmal ein Betriebsnetz lahm legen. Konstruktionsbedingt pulsierte die Leistung, was die Lebensdauer der Lampen verkürzte. Mittlerweile wurden kleine, handliche elektronische Vorschaltgeräte (EVG) entwickelt, welche die Leistungsschwankungen reduzieren und eine stufenlose Regelung ermöglichen. Unterschiedlichste Spannungen, Stromstärken und Frequenzen lassen sich auf diese Weise realisieren. Bei der Anwendung in der Photooxidation werden mehrere Lampen strömungs- wie strahlungsgeometrisch optimiert in einem Reaktor untergebracht.

Neben geringem Platzbedarf sowie geringen Betriebskosten ermöglicht diese Technologie durch stufenlose Regelbarkeit eine flexible Anpassung an die Betriebsbedingungen. UV-Energie muss nur proportional zur Schadstofffracht investiert werden. Das Verfahren eliminiert zu einem großen Anteil Schadstoffe unspezifisch. Diese Umstände bringen mit sich, dass der Betreiber einer Photooxidationsanlage sich nicht zu Beginn seiner Investition auf ein Verfahren für niedrige oder hohe Konzentrationen, bestimmte Volumenströme oder Schadstoffklassen festlegen muss. Der Betreiber kann im Laufe der weiteren Optimierung und Reduzierung seiner Produktions- bzw. Abluftströme die Abluftmengen und Abluftkonzentrationen beliebig verändern, ohne dass der Reinigungsprozess unwirtschaftlich wird. Umgekehrt lässt sich die Technik problemlos an Kapazitätserweiterungen in der Produktion anpassen.

In einer Ausführungsform der Vorrichtung sind in den UV-Reaktor des Weiteren Photokatalytische Materialien eingebracht. Geeignete Materialien für die Photokatalyse umfassen beispielsweise Titandioxid (TiO₂) und Zinkoxid (ZnO). Die Photokatalytischen Materialien können zur Vergrößerung der Reaktionsoberfläche und der Reaktivität auch in Form von Nanomaterialien, beispielsweise Nano-TiO₂ oder Nano ZnO, verwendet werden. Die Nanomaterialien weisen dabei Strukturen im Bereich unter 100 nm Größe auf und können als Partikel oder Strukturen auf größeren Oberflächen auftreten. Die Reaktivität dieser Strukturen steigt umgekehrt überproportional zur Größe der Strukturen an. Sind am UV-Strahler Schutzgehäuse vorgesehen, können an diesen Anbauten mit den Photokatalytische Materialen angeordnet werden.

In einer Ausführungsform der Vorrichtung ist nach dem UV-Reaktor ein Katalysatorbehälter angeordnet. In diesem Katalysatorbehälter werden Materialien auf einem Träger eingebracht, die die Oxidation der Schadstoffe unterstützten. Geeignete Oxidationskatalysatoren umfassen beispielsweise Platin, Rhodium und/oder Palladium. Diese katalytisch aktiven Elemente werden auf einen Träger mit großer Oberfläche, beispielsweise Schüttgüter (beispielsweise Keramik oder Aluminiumoxid), Wabenkörper oder Aktivkohlen (polydispers oder monodispers), aufgebracht oder direkt als Presslinge hergestellt (MnO).

Für die Regeneration der Adsorptionsfilter bzw. des Adsorptionsrads wird Luft in einem Kreislauf vom Adsorptionsfilter über den UV-Reaktor, gegebenenfalls den Katalysator und wieder zurück in den Adsorptionsfilter geleitet. Die für das Desorbieren der Schadstoffe erforderliche Wärme wird durch die Abwärme der UV-Strahler und die UV-Strahlung bereitgestellt. Die Luft wird dabei auf eine Temperatur zwischen 100°C und 350°C, vorzugsweise zwischen 150°C und 200°C erwärmt. In weiteren Ausführungsformen können zusätzliche Heizelemente zum Einbringen von Wärmeenergie bzw. zum Regeln der Prozesstemperatur vorgesehen werden. In weiteren Ausführungsformen der Erfindung können zudem Wärmetauscher und Kondensatoren im Luftstrom angeordnet werden.

Die Kreislaufströmung der Luft zwischen dem Adsorptionsfilter und dem UV-Reaktor wird über ein Gebläse, einen Ventilator oder eine Pumpe aufrechterhalten.

In einer Ausführungsform der Erfindung wird die Schadstoffkonzentration in der Kreislaufströmung gemessen. Damit kann beispielsweise die notwendige Intensität der UV-Strahlung geregelt oder die Dauer der Regenerationsphase festgelegt werden. Sollten in der Luft Schadstoffe enthalten sein, die ab einer bestimmten Konzentration explosive Gemische bilden, kann die Schadstoffmessung verwendet werden, um die Konzentration so zu regeln, dass die Konzentration immer unter einem sicheren Grenzwert verbleibt.

In weiteren Ausführungsformen der erfindungsgemäßen Vorrichtung können der UV-Stufe weitere Stufen nachgeschaltet werden, wie beispielsweise ein Katalysator, eine biologische Stufe sowie Luftwäscher oder Stripper.

### Vorteile der Erfindung

Gegenüber der direkten Photooxidation lassen sich durch die vorgeschlagene Verfahrensweise enorme Einsparungen an Betriebsmitteln wie elektrischer Strom, Lampen und Katalysator erzielen. Neben der erhöhten Effektivität werden die wertintensiven Komponenten wie UV-Lampen und das eingesetzte Katalysatormaterial vor Belagsbildung, Vergiftung und Verblockung durch Aerosole, Stäube und sonstige aggressive Inhaltsstoffe im Hauptstrom geschützt. Durch die Regelung der Intensität der UV-Strahlung wird sowohl Energie eingespart, als auch die Lebensdauer der eingesetzten UV-Lampen verlängert.

Der Schadstoffabbau wird dabei vorteilhaft durch Radikale unterstützt, die durch den Zerfall von Ozon entstehen. Das Ozon wird hierzu nicht aufwendig mittels elektrischer Energie aus Luft oder Sauerstoff erzeugt, sondern energieeffizient mittels UV-Strahlung gewonnen.

Die CO₂-Emissionen bleiben bei dieser Technologie minimal, da nur die eigentlichen Schadstoffe zu Wasser und Kohlendioxid mineralisiert werden. Es wird kein zusätzlicher zu entsorgender Abfall durch Adsorptions- oder Absorptionsmittel generiert. Da es hier keiner offenen Flamme bedarf, kann die Technik auch in explosionsgefährdeten Bereichen eingesetzt werden. Die Handhabung ist einfach und wartungsarm. Die Anlagen sind unempfindlich gegen Betriebsschwankungen oder längere Produktionsstillstände.

### Kurze Beschreibung der Figuren

Anhand der Zeichnungen wird die Erfindung im Folgenden eingehender beschrieben.

Es zeigt:
Figur 1 ein Flussdiagramm des Verfahrens bei Verwendung von mehreren Adsorptionsfiltern,
Figur 2 ein Flussdiagramm des Verfahrens bei Verwendung eines Adsorptionsrads.

### Ausführungsformen der Erfindung

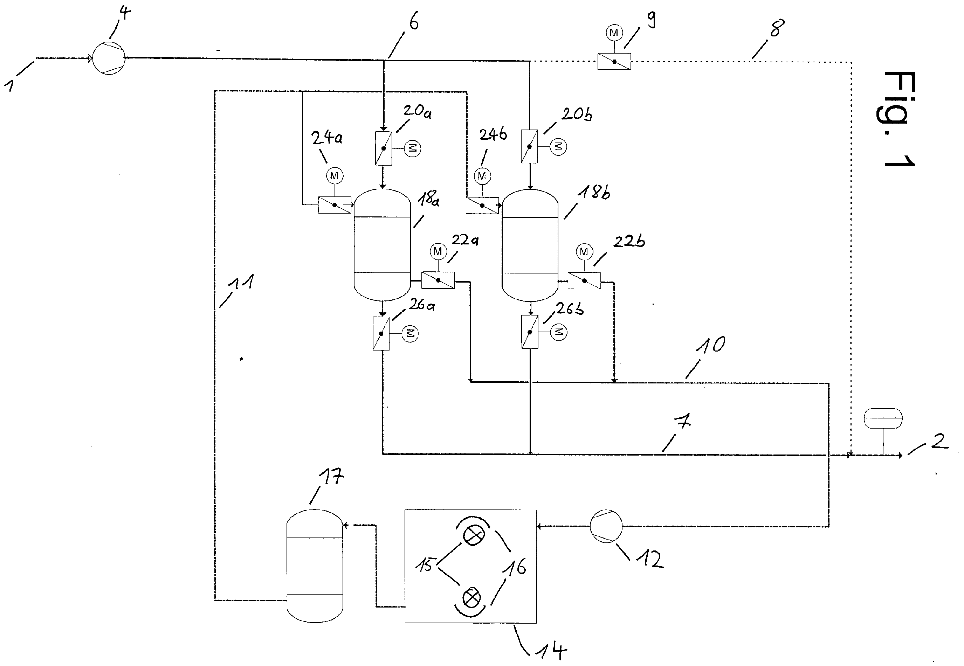

Figur 1 zeigt ein Flussdiagramm des Verfahrens bei Verwendung von mehreren Adsorptionsfiltern, die abwechselnd regeneriert werden.

In Figur 1 ist der Ablauf des Verfahrens zur Aufbereitung von Luft bei Verwendung von mehreren Adsorptionsfiltern dargestellt. Die mit flüchtigen organischen Substanzen (VOC) belastete Luft strömt am Lufteinlass 1 in die Hauptleitung 6 ein. In der in Figur 1 dargestellten Ausführungsform wird ein Gebläse 4 verwendet, um die Luft zu fördern. Je nach Prozess, bei dem die Abluft anfällt, können anstelle des Gebläses 4 auch Pumpen oder Ventilatoren verwendet werden, oder bei ausreichendem Druck kann das Gebläse 4 auch ganz entfallen. Die aufzubereitende Luft strömt entlang der Hauptleitung 6 zu den beiden Adsorptionsfiltern 18a und 18b. Die Adsorptionsfilter 18a und 18b werden zyklisch regeneriert, das heißt ein Filter wird eingesetzt, um in der Luft enthaltende Schafstoffe zu adsorbieren, während der andere Filter regeneriert wird. Bei der Regeneration werden die adsorbierten Schadstoffe wieder aus dem Filter desorbiert. In der in Figur 1 dargestellten Situation wird der zweite Adsorptionsfilter 18b regeneriert, so dass das Ventil 20b geschlossen ist und keine Luft aus der Hauptleitung 6 in den zweiten Adsorptionsfilter gelangen kann. Das Ventil 20a ist hingegen geöffnet und erlaubt das Einströmen der aufzubereitenden Luft in den ersten Adsorptionsfilter 18a.

In weiteren Ausführungsformen des Verfahrens können auch mehr als zwei Adsorptionsfilter vorgesehen werden, um die Kapazität der Anlage zu erhöhen und/oder um die Verfügbarkeit der Anlage zu verbessern. Im Falle eines einzigen Adsorbers erfolgen Adsorption und Regeneration zeitlich nacheinander.

Die Adsorptionsfilter 18a, 18b sind mit einem für die in der Luft enthaltenen Schadstoffe geeignetem Adsorptionsmittel versehen. Die Adsorptionsfilter können als Schüttgutfilter ausgestaltet sein, bei denen das Adsorptionsmittel, beispielsweise Zeolithe oder Aktivkohle in einem Rahmen auf einem Filterbett aufgeschüttet.

In einer weiteren Ausführungsform des Verfahrens werden die Adsorptionsfilter 18a, 18b als Festeinbauten ausgeführt. Das Adsorptionsmittel wird dabei auf einen Träger aufgebracht, der beispielsweise als Wabenstruktur oder eine andere geeignete Festkörperpackung ausgeführt ist. Das verwendete Adsorptionsmittel wird je nach Charakter der VOC (polare VOC oder nonpolare VOC) ausgewählt. Zu den geeigneten Adsorptionsmitteln zählen beispielsweise Aktivkohlen, Zeolithe, Molekularsiebe, Silicagele, Mineralfasern und Kohlefasern.

Nach dem Durchströmen des ersten Adsorptionsfilters 18a sind die schwankenden VOC-Frachten komplett auf den geforderten Emissionsgrenzwert abgeschieden. Die aufbereitete Luft gelangt über das geöffnete Auslassventil 26a in die Ausgangsleitung 7 und verlässt die Anlage durch den Luftauslass 2. Die austretende Abluft erfüllt dauerhaft die geforderten Emissions-Grenzwerte.

Am zweiten Adsorptionsfilter 18b ist das Auslassventil 26b geschlossen, da dieser Adsorptionsfilter gerade regeneriert wird. Dazu ist das Kreislaufventil 22b und das Rücklaufventil 24b geöffnet. Durch das Rücklaufventil 24b strömt warme Luft mit einer Temperatur zwischen 100 °C und 350 °C. Die warme Luft durchströmt den Adsorptionsfilter 18b und fördert die Desorption von vorher adsorbierten Schadstoffen. Die desorbierten Schadstoffe gelangen mit dem warmen Luftstrom durch das geöffnete Kreislaufventil 22b in die Kreislaufleitung 10. Die Luftströmung im Regenerationskreislauf wird über das Gebläse 12 aufrechterhalten. Aus der Kreislaufleitung 10 gelangt die belastete Luft in den UV-Reaktor 14. Durch das Aufkonzentrieren der Schadstoffe in den Adsorptionsfiltern weist der am UV-Reaktor ankommende Luftstrom eine gleichmäßige und hohe VOC-Konzentration auf, wodurch sich die Effektivität des UV-Reaktors 14 erhöht.

Im UV-Reaktor 14 sind mehrere UV-Strahler 15 angeordnet. In der in Figur 1 dargestellten Ausführungsform weist der UV-Reaktor 14 zudem einen Photokatalysator 16 auf. Der Photokatalysator 16 ist im UV-Reaktor 14 so angeordnet, dass die Luftströmung wenig behindert wird und gleichzeitig die Oberfläche des Photokatalysators 16 gleichmäßig mit dem UV-Licht bestrahlt werden kann.

Durch die Intensive UV-Strahlung findet Photolyse statt, das heißt es werden im UV-Reaktor 14 Schadstoffe durch Absorption von Licht aufgespalten. Die Kohlenwasserstoffanteile werden mineralisiert bis zu CO₂ und Wasser. Fremdatome wie Cl, N, S und so weiter werden auf ihre niedrigsten Oxidationsstufen transformiert, beispielsweise zu HCl, NOₓ, SOₓ.

Aufgrund der intensiven UV und VUV-Strahlung im UV-Reaktor 14, wird Luftsauerstoff ozonolysiert, das heißt aus dem Luftsauerstoff wird durch die UV-Strahlung Ozon erzeugt. Das entstehende Ozon zerfällt zu Radikalen, welche den Photolyseprozess überproportional verstärken. Das in der Luftfeuchtigkeit enthaltene Wasser wird ebenfalls homolysiert, in OH-Radikale gespalten, welche ebenfalls an der Oxidationsreaktion mit dem Schadstoff teilnehmen.

Durch die UV-Strahlung und die Abwärme der UV-Strahler 15 wird die Luft auf die Prozesstemperatur von 100°C bis 350°C erwärmt. Die Wärme wirkt sich vorteilhaft auf die Desorption der Schadstoffe im Adsorptionsfilter aus. Sollte die Abwärme der UV-Strahler 15 bzw. die durch die UV-Strahlung eingetragene Wärme nicht ausreichend sein, können zusätzliche Heizelemente vorgesehen werden.

In einer Ausführungsform der Erfindung wird an der Kreislaufleitung 10 ein Reaktionsmittel ausgewählt aus Luft oder Sauerstoff zugegeben.

In der in Figur 1 dargestellten Ausführungsform des Verfahrens ist dem UV-Reaktor 14 ein Katalysator 17 nachgeschaltet. In dem Katalysator 17 werden verbleibende Schadstoffe oxidiert. Geeignete Oxidationskatalysatoren umfassen beispielsweise Platin, Rhodium und/oder Palladium. Diese katalytisch aktiven Elemente werden auf einen Träger mit großer Oberfläche, beispielsweise Schüttgüter (beispielsweise Keramik oder Aluminiumoxid), MnO-Presslinge, Wabenkörper oder Aktivkohlen (polydispers oder monodispers), aufgebracht und in den Katalysator 17 eingesetzt.

Nachdem der Luftstrom den Katalysator 17 passiert hat, gelangt dieser über die Rückleitung 17 und das geöffnete Rücklaufventil 24b zurück in den zweiten Adsorptionsfilter 18b. Die Luft strömt so lange im Kreis durch den Adsorptionsfilter 18b und den UV-Reaktor 14, bis die Schadstoffkonzentration unter einen vorgegeben Grenzwert gesunken ist und/oder eine vorgegebene Zeitspanne vergangen ist. Die Regeneration des Adsorptionsfilters wird beendet, in dem die von dem Gebläse erzeugte Kreislaufströmung beendet wird und in dem die Ventile 24b und 22b geschlossen werden. Nachdem der Adsorptionsfilter 18b ausgekühlt ist, steht dieser erneut für die Adsorption von Schadstoffen zur Verfügung.

In der in Figur 1 dargestellten Situation sind das Kreislaufventil 22a und das Rücklaufventil 24a am ersten Adsorptionsfilter 18a geschlossen, da dieser Adsorptionsfilter momentan nicht regeneriert wird.

Falls die durch die Hauptleitung 6 strömende Luft keiner Behandlung bedarf bzw. falls Revisionsarbeiten an der Anlage erforderlich werden, kann die Luft über das Bypassventil 9 und die Bypassleitung 8 unter Umgehung der Adsorptionsfilter 18a, 18b in den Luftauslass 2 strömen.

In weiteren Ausführungsformen des Verfahrens sind vor dem Gebläse 4 Tropfenabscheider und/oder Staub-Aerosolfilter angeordnet. Dadurch werden grobe Verunreinigungen, die die Filter in ihrer Funktionen beeinträchtigen würden, zurückgehalten.

In einer weiteren Ausführungsform des Verfahrens wird die Konzentration der Schadstoffe in der Kreislaufleitung 10 gemessen. Die gemessene Schadstoffkonzentration wird zur Regelung der Regenerationszeit sowie der Intensität der UV-Strahlung verwendet.

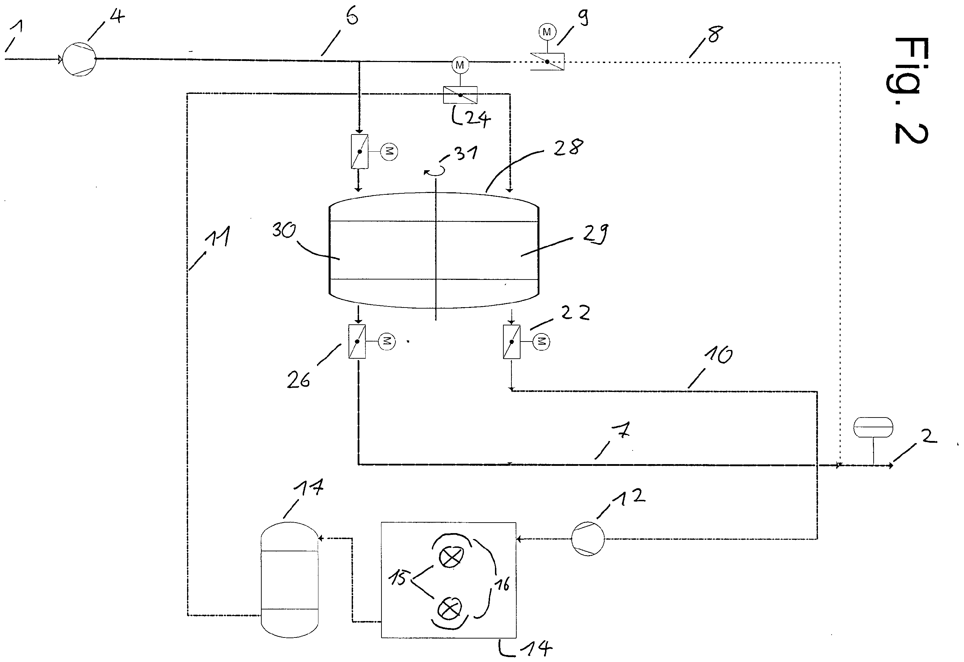

Figur 2 zeigt ein Flussdiagramm des Verfahrens bei Verwendung eines Adsorptionsrads.

In Figur 2 ist der Ablauf des Verfahrens zur Aufbereitung von Luft bei Verwendung eines Adsorptionsrads dargestellt. Die mit flüchtigen organischen Substanzen (VOC) belastete Luft strömt am Lufteinlass 1 in die Hauptleitung 6 ein. In der in Figur 2 dargestellten Ausführungsform wird ein Gebläse 4 verwendet, um die Luft zu fördern. Je nach Prozess, bei dem die Abluft anfällt, können anstelle des Gebläses 4 auch Pumpen verwendet werden, oder bei ausreichendem Druck kann das Gebläse 4 auch ganz entfallen. Die aufzubereitende Luft strömt entlang der Hauptleitung 6 durch das geöffnete Hauptleitungsventil 20 zum Adsorptionsrad 28.

Die im Adsorptionsrad 28 eingesetzten Filter sind üblicherweise aus aufgewickelten Bahnen aufgebaut, die mit einem Adsorptionsmittel beschichtet sind. Dabei lassen sich die in den Adsorptionsrädern eingesetzten Filter in mehrere Bereiche unterteilen, wobei mindestens ein Adsorptionsbereich 30 Schadstoffe aus der Luft adsorbiert während ein Regenerationsbereich 29 regeneriert wird oder vor einer erneuten Verwendung abgekühlt wird.

Das Adsorptionsrad 28 wird wie mit dem Pfeil 31 angedeutet langsam um seine Achse gedreht. Dadurch gelangen mit Schadstoffen gesättigte Bereiche des Adsorptionsrads aus dem Adsorptionsbereich 30 in den Regenerationsbereich 29 und umgekehrt. Üblicherweise dauert dabei die Adsorptionsphase ca. 50 bis 100 Stunden an, während die Desorptionszeit bei der Regenerationsphase ca. 10 bis 20 Stunden beträgt.

Die mit VOC belastete Luft strömt aus der Hauptleitung 6 durch das Hauptleitungsventil 20 in den Adsorptionsbereich 30 des Adsorptionsrads 28. Dabei werden die schwankenden VOC-Frachten komplett auf den geforderten Emissionsgrenzwert abgeschieden Nach dem Durchströmen des Adsorptionsbereichs 30 gelangt die Luft durch das geöffnete Auslassventil 26 und die Auslassleitung 7 zum Luftauslass 2. Die austretende Abluft erfüllt dauerhaft die geforderten Emissions-Grenzwerte.

Währenddessen wird der im Regenerationsbereich 29 liegende Teil des Adsorptionsrads 28 regeneriert. Dazu sind das Kreislaufventil 22 und das Rücklaufventil 24 geöffnet. Durch das Rücklaufventil 24 strömt warme Luft mit einer Temperatur zwischen 100 °C und 350 °C. Die warme Luft durchströmt den Regenerationsbereich 29 des Adsorptionsrads 28 und fördert die Desorption von vorher adsorbierten Schadstoffen. Die desorbierten Schadstoffe gelangen mit dem warmen Luftstrom durch das geöffnete Kreislaufventil 22 in die Kreislaufleitung 10. Die Luftströmung im Regenerationskreislauf wird über das Gebläse 12 aufrechterhalten. Aus der Kreislaufleitung 10 gelangt die belastete Luft in den UV-Reaktor 14. Durch das Aufkonzentrieren der Schadstoffe in den Adsorptionsfiltern weist der am UV-Reaktor ankommende Luftstrom eine gleichmäßige und hohe VOC-Konzentration auf, wodurch sich die Effektivität des UV-Reaktors 14 erhöht.

Im UV-Reaktor 14 sind mehrere UV-Strahler 15 angeordnet. In der in Figur 1 dargestellten Ausführungsform weist der UV-Reaktor 14 zudem einen Photokatalysator 16 auf. Der Photokatalysator 16 ist im UV-Reaktor 14 so angeordnet, dass die Luftströmung wenig behindert wird und gleichzeitig die Oberfläche des Photokatalysators 16 gleichmäßig mit dem UV-Licht bestrahlt werden kann.

Durch die Intensive UV-Strahlung findet Photolyse statt, das heißt es werden im UV-Reaktor 14 Schadstoffe durch Absorption von Licht aufgespalten. Die Kohlenwasserstoffanteile werden mineralisiert bis zu CO₂ und Wasser. Fremdatome wie Cl, N, S und so weiter werden auf ihre niedrigsten Oxidationsstufen transformiert, beispielsweise zu HCl, NOₓ, SOₓ.

Aufgrund der intensiven UV und VUV-Strahlung im UV-Reaktor 14, wird Luftsauerstoff ozonolysiert, das heißt aus dem Luftsauerstoff wird durch die UV-Strahlung Ozon erzeugt. Das entstehende Ozon zerfällt zu Radikalen, welche den Photolyseprozess überproportional verstärken. Das in der Luftfeuchtigkeit enthaltene Wasser wird ebenfalls homolysiert, in OH-Radikale gespalten, welche ebenfalls an der Oxidationsreaktion mit dem Schadstoff teilnehmen.

Durch die UV-Strahlung und die Abwärme der UV-Strahler 15 wird die Luft auf die Prozesstemperatur von 100°C bis 350°C erwärmt. Die Wärme wirkt sich vorteilhaft auf die Desorption der Schadstoffe im Adsorptionsfilter aus. Sollte die Abwärme der UV-Strahler 15 bzw. die durch die UV-Strahlung eingetragene Wärme nicht ausreichend sein, können zusätzliche Heizelemente vorgesehen werden.

In einer Ausführungsform der Erfindung wird an der Kreislaufleitung 10 ein Reaktionsmittel ausgwählt aus Luft oder Sauerstoff zugegeben.

In der in Figur 2 dargestellten Ausführungsform des Verfahrens ist dem UV-Reaktor 14 ein Katalysator 17 nachgeschaltet. In dem Katalysator 17 werden verbleibende Schadstoffe oxidiert. Geeignete Oxidationskatalysatoren umfassen beispielsweise Platin, Rhodium und/oder Palladium. Diese katalytisch aktiven Elemente werden auf einen Träger mit großer Oberfläche, beispielsweise Schüttgüter (beispielsweise Keramik oder Aluminiumoxid), MnO-Presslinge, Wabenkörper oder Aktivkohlen (polydispers oder monodispers), aufgebracht und in den Katalysator 17 eingesetzt.

Nachdem der Luftstrom den Katalysator 17 passiert hat, gelangt dieser über die Rückleitung 17 und das geöffnete Rücklaufventil 24 zurück in den Regenerationsbereich 29 des Adsorptionsrads 28. Die Luft strömt kontinuierlich im Kreis durch den Regenerationsbereich 29 und den UV-Reaktor 14. Durch die Drehung des Adsorptionsrads gelangen regenerierte Teile aus dem Regenerationsbereich 29 wieder in den Adsorptionsbereich 30 und umgekehrt.

Falls die durch die Hauptleitung 6 strömende Luft keiner Behandlung bedarf bzw. falls Revisionsarbeiten an der Anlage erforderlich werden kann die Luft über das Bypassventil 9 und die Bypassleitung 8 unter Umgehung der Adsorptionsfilter 18a, 18b in den Luftauslass 2 strömen.

## Patentansprüche

1. Verfahren zur Aufbereitung von Luft durch Adsorption von Schadstoffen in mindestens einem Filter (28, 18a, 18b), wobei der mindestens eine Filter (28, 18a, 18b) thermisch regenerierbar ist wobei bei der Regeneration Schadstoffe mittels UV-Strahlung durch Photooxidation abgebaut werden **dadurch gekennzeichnet, dass** die Regeneration in einem separaten Luftkreislauf stattfindet und der Schadstoffabbau bei der Regeneration der Filter (28, 18a, 18b) durch Zugabe von Reaktionsmittel ausgewählt aus Luft oder Sauerstoff unterstützt wird.

2. Verfahren nach Anspruch 1, **dadurch gekennzeichnet, dass** durch UV-Lichtbestrahlung aus dem in der Luft enthaltenen Sauerstoff Ozon erzeugt wird, welches den Schadstoffabbau unterstützt.

3. Verfahren nach Anspruch 1 oder 2, **dadurch gekennzeichnet, dass** zum Schadstoffabbau mittels Photooxidation Mitteldruck-VUV-Lampen oder Niederdruck-UV-Lampen eingesetzt werden, oder Hochdruck-UV-Lampen oder Excimer-Strahler eingesetzt werden.

4. Verfahren nach einem der Ansprüche 1 bis 3, **dadurch gekennzeichnet, dass** die thermische Regeneration bei einer Temperatur im Bereich von 100°C bis 350°C durchgeführt wird, wobei die Heizenergie durch die UV-Strahlung oder ein separates Heizmedium eingetragen wird.

5. Verfahren nach einem der Ansprüche 1 bis 4, **dadurch gekennzeichnet, dass** zur Unterstützung der Oxidation mindestens ein Oxidations katalysator (17) verwendet wird.

6. Verfahren nach einem der Ansprüche 1 bis 5, **dadurch gekennzeichnet, dass** der Schadstoffabbau bei der Regeneration der Filter mittels Photolyse, Ozonolyse und/oder Homolyse unterstützt wird.

7. Verfahren nach einem der Ansprüche 1 bis 6, **dadurch gekennzeichnet, dass** der Schadstoffabbau bei der Regeneration der Filter mittels Photokatalyse mit photokatalytischen Materialien (16), insbesondere TiO2, ZnO, oder mit photokatalytischen Materialien in Form von Nanostrukturen, insbesondere Nano-TiO2, Nano-ZnO, unterstützt wird.

8. Verfahren nach einem der Ansprüche 1 bis 7, **dadurch gekennzeichnet, dass** der zur Adsorption der Schadstoffe verwendete Filter (28, 18a, 18b) als Adsorptionsrad, als Schüttgutfilter mit Adsorptionsmittel und/oder als mit Adsorptionsmittel beschichtete Festeinbauten ausgeführt ist.

9. Verfahren nach einem der Ansprüche 1 bis 8, **dadurch gekennzeichnet, dass** der Regeneration mittels Photooxidation eine biologische Stufe zur Nachreinigung nachgeschalten wird.

10. Vorrichtung zur Durchführung des Verfahrens nach einem der Ansprüche 1 bis 9, umfassend mindestens einen Filter (28, 18a, 18b) und mindestens einen UV-Reaktor (14) mit UV-Lichtquelle (15), wobei der mindestens eine Filter (28, 18a, 18b) eingerichtet ist, Schadstoffe aus einem Luftstrom zu adsorbieren und der Filter (28, 18a, 18b) thermisch regenerierbar ist, wobei die Vorrichtung weiterhin einen separaten Regenerationskreislauf umfasst und dieser dazu vorgesehen ist, dass ein Reaktionsmittel ausgewählt aus Luft oder Sauerstoff in den Regenerationskreislauf zugegeben wird.

11. Vorrichtung nach Anspruch 10, **dadurch gekennzeichnet, dass** die mindestens eine UV-Lichtquelle (15) als Mitteldruck-VUV-Lampe, Niederdruck-UV-Lampe, Hochdruck-VUV-Lampe oder Excimer-Strahler ausgeführt ist.

12. Vorrichtung nach Anspruch 10 oder 11, weiter umfassend mindestens einen Oxidationskatalysator (17).

13. Vorrichtung nach einem der Ansprüche 10 bis 12, **dadurch gekennzeichnet, dass** der UV-Reaktor (14) photokatalytische Materialien umfasst, die insbesondere als Nano-Strukturen ausgeführt sind.

14. Vorrichtung nach einem der Ansprüche 10 bis 13, **dadurch gekennzeichnet, dass** der mindestens eine Filter als Adsorptionsrad (28), als Schüttgutfilter mit Adsorptionsmittel und/oder als mit Adsorptionsmittel beschichtete Festeinbauten ausgeführt ist.

## Claims

1. A method for the treatment of air by adsorption of pollutants in at least one filter (28, 18a, 18b), wherein the at least one filter (28, 18a, 18b) is thermally regenerable, wherein pollutants are decomposed by photo-oxidation by means of UV radiation during regeneration, **characterized in that** the regeneration takes place in a separate air circuit and the decomposition of pollutants during the regeneration of the filters (28, 18a, 18b) is supported by the addition of a reactant selected from air or oxygen.

2. The method according to claim 1, **characterized in that** ozone is generated from the oxygen contained in the air by UV light irradiation, said ozone supporting the decomposition of pollutants.

3. The method according to claim 1 or 2, **characterized in that** for the decomposition of pollutants by means of photo-oxidation, medium-pressure VUV lamps or low-pressure UV lamps are used, or high-pressure UV lamps or excimer lamps are used.

4. The method according to one of claims 1 to 3, **characterized in that** the thermal regeneration is carried out at a temperature in a range of 100°C to 350°C, wherein the heating energy is introduced by the UV radiation or by a separate heating medium.

5. The method according to one of claims 1 to 4, **characterized in that** at least one oxidation catalyst (17) is used to support the oxidation.

6. The method according to one of claims 1 to 5, **characterized in that** the decomposition of pollutants during the regeneration of the filters is supported by means of photolysis, ozonolysis and/or homolysis.

7. The method according to one of claims 1 to 6, **characterized in that** the decomposition of pollutants during the regeneration of the filters is supported by means of photocatalysis with photocatalytic materials (16), in particular TiO2, ZnO, or with photocatalytic materials in the form of nanostructures, in particular Nano-TiO2, Nano-ZnO.

8. The method according to one of claims 1 to 7, **characterized in that** the filter (28, 18a, 18b) used for the absorption of pollutants is designed as an adsorption wheel, as a bulk material filter with adsorbent and/or as fixed installations coated with adsorbent.

9. The method according to one of claims 1 to 8, **characterized in that** the regeneration by means of photo-oxidation is followed by a biological stage for subsequent purification.

10. A device for carrying out the method according to one of claims 1 to 9, comprising at least one filter (28, 18a, 18b) and at least one UV reactor (14) with a UV light source (15), wherein the at least one filter (28, 18a, 18b) is configured to adsorb pollutants from an air stream and the filter (28, 18a, 18b) is thermally regenerable, wherein the device further comprises a separate regeneration circuit and said separate regeneration circuit is provided for adding a reactant selected from air or oxygen to the regeneration circuit.

11. The device according to claim 10, **characterized in that** the at least one UV light source (15) is designed as a medium-pressure VUV lamp, a low-pressure UV lamp, a high-pressure UV lamp or an excimer lamp.

12. The device according to claim 10 or 11, further comprising at least one oxidation catalyst (17).

13. The device according to one of claims 10 to 12, **characterized in that** the UV reactor (14) comprises photocatalytic materials which are in particular designed as nanostructures.

14. The device according to one of claims 10 to 13, **characterized in that** the at least one filter is designed as an adsorption wheel (28), as a bulk material filter with adsorbent and/or as fixed installations coated with adsorbent.

## Revendications

1. Procédé de traitement de l'air par adsorption de substances nocives dans au moins un filtre (28, 18a, 18b), dans lequel l'au moins un filtre (28, 18a, 18b) peut être régénéré thermiquement, dans lequel, lors de la régénération, les substances nocives sont décomposées au moyen d'un rayonnement UV par photo-oxydation, **caractérisé en ce que** la régénération a lieu dans un circuit d'air séparé et la décomposition des substances nocives lors de la régénération des filtres (28, 18a, 18b) est favorisée par l'ajout de réactifs sélectionnés parmi l'air ou l'oxygène.

2. Procédé selon la revendication 1, **caractérisé en ce que**, par irradiation à l'aide d'une lumière UV, de l'ozone est généré à partir de l'oxygène contenu dans l'air, et cet ozone favorise la décomposition des substances nocives.

3. Procédé selon la revendication 1 ou 2, **caractérisé en ce que**, pour la décomposition des substances nocives par photo-oxydation, sont utilisées des lampes VUV à moyenne pression ou des lampes UV à basse pression, ou des lampes UV à haute pression ou des projecteurs à excimères.

4. Procédé selon l'une des revendications 1 à 3, **caractérisé en ce que** la régénération thermique est effectuée à une température de l'ordre de 100 °C à 350 °C, dans lequel l'énergie de chauffage est apportée par le rayonnement UV ou un milieu chauffant séparé.

5. Procédé selon l'une des revendications 1 à 4, **caractérisé en ce que**, pour favoriser l'oxydation, au moins un catalyseur (d'oxydation) (17) est utilisé.

6. Procédé selon l'une des revendications 1 à 5, **caractérisé en ce que** la décomposition des substances nocives lors de la régénération des filtres est favorisée au moyen d'une photolyse, d'une ozonolyse et/ou d'une homolyse.

7. Procédé selon l'une des revendications 1 à 6, **caractérisé en ce que** la décomposition des substances nocives lors de la régénération des filtres est favorisée au moyen d'une photo-catalyse avec des matériaux photocatalytiques (16), plus particulièrement du TiO2, du ZnO ou avec des matériaux photo-catalytiques sous forme de nanostructures, plus particulièrement du nano-TiO2, du nano-ZnO.

8. Procédé selon l'une des revendications 1 à 7, **caractérisé en ce que** le filtre (28, 18a, 18b) utilisé pour l'adsorption des substances nocives est conçu comme une roue d'adsorption, un filtre de produits en vrac avec des moyens d'adsorption et/ou comme des composants fixes revêtus de moyens d'adsorption.

9. Procédé selon l'une des revendications 1 à 8, **caractérisé en ce que**, après la régénération par photo-oxydation, est disposé un étage biologique pour le post-nettoyage.

10. Dispositif pour l'exécution du procédé selon l'une des revendications 1 à 9, comprenant au moins un filtre (28, 18a, 18b) et au moins un réacteur UV (14) avec une source de lumière UV (15), dans lequel l'au moins un filtre (28, 18a, 18b) est conçu pour adsorber les substances provenant d'un flux d'air et le filtre (28, 18a, 18b) peut être régénéré thermiquement, dans lequel le dispositif comprend en outre un circuit de régénération séparé et celui-ci est prévu de façon à ce qu'un réactif sélectionné parmi l'air ou l'oxygène soit ajouté au circuit de régénération.

11. Dispositif selon la revendication 10, **caractérisé en ce que** l'au moins une source de lumière UV (15) est conçue comme une lampe VUV à moyenne pression, une lampe UV à basse pression, une lampe VUV à haute pression ou un projecteur à excimères.

12. Dispositif selon la revendication 10 ou 11, comprenant en outre au moins un catalyseur (d'oxydation) (17).

13. Dispositif selon l'une des revendications 10 à 12, **caractérisé en ce que** le réacteur UV (14) comprend des matériaux photo-catalytiques qui sont conçus plus particulièrement comme des nanostructures.

14. Dispositif selon l'une des revendications 10 à 13, **caractérisé en ce que** l'au moins un filtre est conçu comme une roue d'adsorption (28), un filtre de produits à vrac avec des moyens d'adsorption et/ou comme des composants fixes revêtus de moyens d'adsorption.
